# EUROPEAN PATENT APPLICATION

(11) **EP 1 324 250 A1**
(43) Date of publication of application: **02.07.2003**
(21) Application number: 02028742.1
(22) Date of filing: 20.12.2002
(51) Int. Cl.: G06F 17/60

(54) **Context-aware marketing service**

(30) Priority: 28.12.2001 US 344292 P; 28.06.2002 US 186844
(71) Applicant: DoCoMo Communications Laboratories USA, Inc., San Jose, CA 95110 (US)
(72) Inventor: Lee, Allen, San Jose, CA 95112 (US)
(74) Representative: HOFFMANN - EITLE

(57) **Abstract**

A mobile virtual network operators system is disclosed. The mobile virtual network operators system provides a single point of contact for wireless customers accessing a variety of services offered by a plurality of vendors. The mobile virtual network operators system may generate a sales proposal for a customer or a vendor and handle a proposal generated by a customer or a vendor. The mobile virtual network operators system may include a vendor database and a customer database. The mobile virtual network operators system receives, records and analyzes plurality of the customer's product search requests to form the customer's context aware purchase history. The customer database may store accumulated context aware purchase histories for a plurality of customers. The mobile virtual network operators system may generate a solicitation proposal for a customer based on the customer's context aware purchase history. The mobile virtual network operators system can anticipate customer's needs in advance and can generate a proposal accordingly.

## Description

### BACKGROUND OF THE INVENTION

The transfer of information over computer networks has become an increasingly important means by which institutions, corporations, and individuals do business. Computer networks have grown over the years from independent and isolated entities established to serve the needs of a single group into vast Internets, which interconnect disparate physical networks and allow them to function as a coordinated system. Currently, the largest computer network in existence is the Internet. The Internet is a worldwide interconnection of computer networks that communicate using a common protocol. Millions of computers, from low end personal computers to high end super computers, are connected to the Internet.

The transformation of the Internet into a global marketplace was driven in large part by the introduction of an information system known as the World Wide Web ("the Web"). Any person with a computer and a connection to the Internet may access any publicly accessible page posted on the Web. Thus, a presence on the Web has the capability to introduce a worldwide base of consumers to businesses, individuals, and institutions seeking to advertise their products and services to potential customers. Hence the Internet has emerged as an attractive new medium for advertisers to reach the consumers.

Nevertheless even on the Internet, locating potential customers has been a challenge for vendors, and locating the wanted product for the wanted price is a dilemma often encountered by consumers. Internet marketing can help a vendor reach the target audiences for a product, as well as help a customer locate a desired product. But when used ad hoc, Internet marketing does not guarantee the intended results, given that not all marketing messages are useful or welcome. In fact, some of the marketing solicitation messages can be downright annoying. The messages are not relevant to what the customer does, prefers, thinks, or what the consumer's lifestyle is. In order for solicitation to be successful, it is important that customer requests be satisfied without sacrificing the vendor's business goals.

Conventionally, vendors who offer to sell products over the Internet manually keep track of who their customers are, what their purchase habits are, and the kind of products they most frequently purchase. Moreover, as the volume and diversity of the Internet content has grown, many vendors seek to use the Internet as their marketing tool. What is needed is an automated system that will track the consumer's profile which can be used for increasing the vendor's business.

It has been difficult for a mobile customer to find various types of services provided by different providers at a single location. A mobile customer generally does not have a trusting relationship with the vendors. What is needed is a single trustworthy point of contact for dealing with various vendors, and a mediator representing the conflicting interests of the consumers and the vendors. The present invention seeks to address these issues. More particularly, the preferred embodiment relates to a system and method to enable the customer to benefit from a wide range of services provided by different service providers via a virtual network operator who is a single point of contact for a customer.

Recently, some websites such as Amazon.com have been keeping track of a customer's preferences and are presenting solicitations for the products in which a customer has expressed an interest. Such websites, however, are associated with and owned by a single vendor.

### BRIEF SUMMARY OF THE INVENTION

The present application provides a system and a method of generating a sale, using a computer network. More specifically the preferred embodiment of the present application provides a mobile virtual network operators system (MVNO) system that offers the mobile wireless customers a single point of contact to a variety of services offered by several vendors. Each time a customer presents a search request, the MVNO system gathers and analyzes the customer's context aware information. Such accumulated context information builds the customer's purchase history. The MVNO system maintains a customer database to store the purchase histories of the customers of the MVNO system. The MVNO system also maintains a vendor database to store the purchase histories of the MVNO system vendors.

The MVNO system may receive a purchase proposal from a customer who is seeking to purchase a product. Then the MVNO system searches the vendor database to find the vendors who sell the product the proposing customer is seeking to purchase. The MVNO system presents the customer's purchase proposal to the respective vendors.

Similarly the MVNO system may receive a promotional proposal from a vendor. The MVNO system first searches the customer database to locate the customers who are likely to be interested in purchasing the product the vendors are seeking to sell. Then the MVNO system presents the promotional proposal to the customers.

Furthermore, the MVNO system itself can generate a solicitation proposal for a customer based on the customer's purchase history. The MVNO system first presents the proposal to the vendors who sell the product which is the subject matter of the solicitation proposal. If the vendors accept the solicitation proposal the MVNO system presents the proposal to the customers who are likely to be interested in the product.

### BRIEF DESCRIPTION OF SEVERAL VIEWS OF THE DRAWINGS

FIG. 1 is a block diagram illustrating the Revenue Flow of the MVNO system. It describes how the revenue flows between from a customer to the MVNO system, and finally to a vendor;

FIG. 2 is a block diagram of storage of information in the MVNO system;

FIG. 3 is a control flow diagram illustrating the information processing cycle employed by the MVNO system;

FIG. 4 is a diagram demonstrating the solicitation phase in the MVNO system wherein the MVNO system proactively anticipates customer's needs and presents a solicitation proposal to the customer;

FIG. 5 is a diagram describing the financial structure employed by the MVNO system;

FIG. 6 is a diagram describing various types of contacts occurring between the MVNO system and a vendor and a customer;

FIG. 7 is a snapshot of a prior art of the MVNO system; and

FIG. 8 is a control flow diagram of the MVNO system, explaining the sequence of events in the MVNO system and actions that are associated with the happening of each event.

### DETAILED DESCRIPTION OF THE PRESENTLY PREFERRED EMBODIMENTS

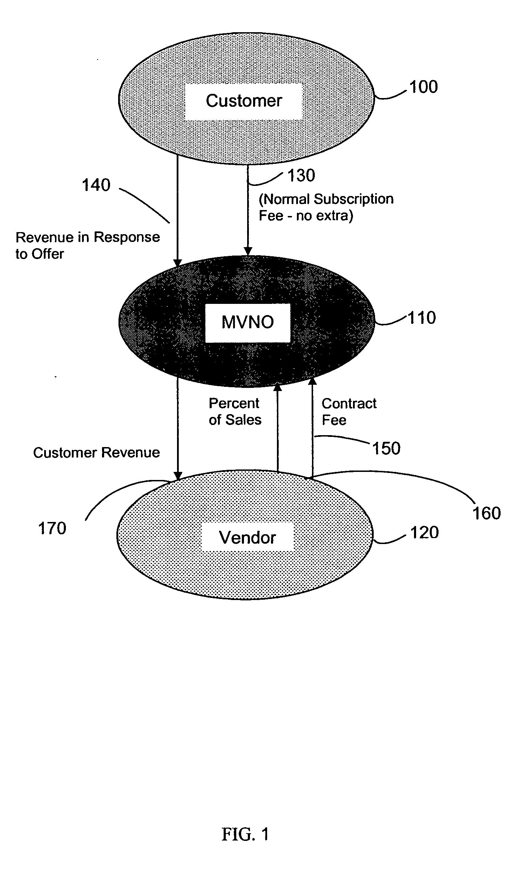

The revenue flow model employed by an MVNO system 110 is described in FIG. 1. The MVNO system 110 is a system, which allows the mobile wireless customers to access the services provided by several providers via a single network operator. The MVNO system 110 acts as a liaison between a customer 100 and a vendor 120. The customer 100 uses the MVNO system 110 to locate a product. The vendor 120 sells the product needed by the customer 100 and uses the MVNO system 110 to reduce the marketing cost. The customer 100 does not have to pay extra subscription costs 130 for using the MVNO system 110. In one embodiment, a percentage of the revenue generated from the sale accomplished by the MVNO system 110 is given to MVNO system 110 as a commission. Any sale generated by the MVNO system 110 falls under one of the three categories: the first being a sale originated by the customer 100, the second being a sale originated by the MVNO system 110, and the third being a sale originated by the vender 120. The MVNO system 110 is paid a commission for all three kinds of sales accomplished.

The MVNO system 110 conducts research by analyzing each request of the customer 100. This enables the MVNO system 110 to anticipate the customer 100's future needs and to present a solicitation proposal for the products in which the customer has expressed an interest in the past. The revenue 140 generated by the sales accomplished by the MVNO system 110, flows from customer 100 to the MVNO system 110.

Therefore, unlike a blind solicitation call, the customers 100 using the MVNO system do not avoid the MVNO system 110. On the contrary, a trusting relationship is established between the MVNO system 110 and a customer 100, wherein the customer 100 relies on the MVNO system 110 to locate the best price for the product needed by the customer 100. Because the MVNO system 110 saves the customer 100's time, money, and search efforts, the customer 100 generally welcomes the MVNO system 110's proposals.

The MVNO system 110 has a built-in system of checks and balances. Because the customer 100 is less likely to buy something that does not satisfy his requirements, the MVNO system 110 ensures that any product proposed to the customer 100 meets the specific needs of the customer 100. The MVNO system 110 acts as the customer 100's agent. In return, for each sale accomplished, the MVNO system 110 is entitled to a commission 160, which is a significant percentage of the sale revenue.

Besides being a customer 100's agent, the MVNO system 110 also represents the vendor 120. Being a vendor 120's representative, the MVNO system 110 is not entitled to a commission unless a product is actually sold, or a service is actually rendered. Hence, the MVNO system 110 is definitely interested in accomplishing a sale. The customer 100 would generally prefer to purchase the best quality product or service at the lowest price. At the same time, the vendor 120 would be interested in securing a maximum possible profit on a sale. Representing two potentially conflicting interests is a very challenging task. Therefore, the MVNO system 110 has to sell the product the customer 100 needs, at a price that is acceptable to the vendor 120.

As for the fiscal relationship between the vendor 120 and the MVNO system 110, the vendor 120 owes the MVNO system 110 a standard fixed contract fee 150, as well as a percent commission on sales 160 accomplished by the MVNO system 110. In return, the customer revenue 170 generated by the sales accomplished by the MVNO system 110, flows from the MVNO system 110 to the vendor 120. The vendor 120 does not have to incur any additional marketing, research, or solicitation costs in order to sell a product. Conventionally, the vendors have an active role in performing market research, identifying the prospective customers, defining the customer's needs, gathering their prior purchase history etc. The vendor 120 using the MVNO system on the other hand, is only required to pay a commission 160 and a contract fee 150 to the MVNO system 110 and to input the product information in the MVNO system 110, such as the cost, the accepted lowest price, etc.

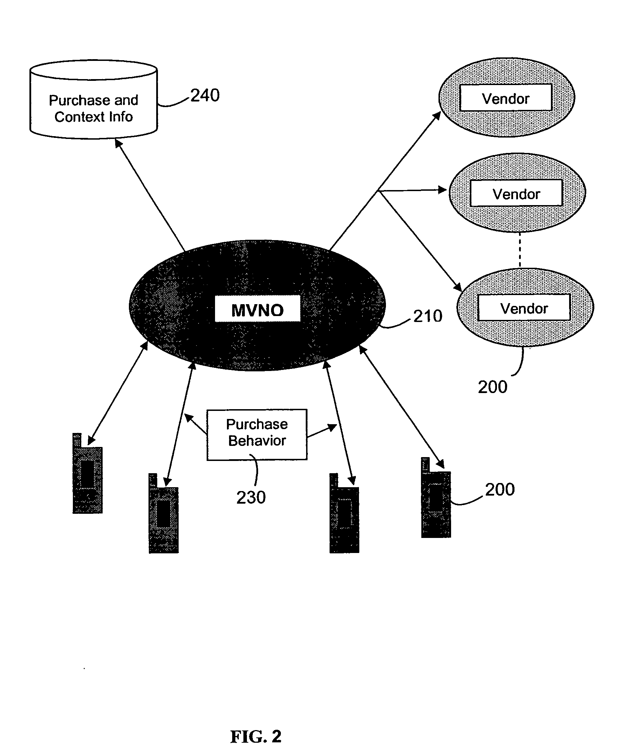

FIG. 2 describes the information storage schema in an MVNO system 210. A purchase and context information database 240 stores the information about each customer 200 in a customer record. The purchase and context information database 240 includes one record for each of a plurality of customers 200. Each customer record contains the context information of each purchase by the customer 200. The context information includes a unique customer identifier that identifies each customer 200 in the purchase and context information database 240. The customer record also includes the plurality of product categories, which is the name of a category from which the customer 200 purchased a product. The purchase and context information database 240 also stores information such as the product purchased, the purchase price, the features looked at, the time taken to run the query, the customer 200's reason for searching for a product, location from where the customer 200 ran the queries, etc. The purchase and context information database 240 is updated to record every single purchase behavior 230 of the customer 200.

The MVNO system 210 has the ability to sense the customer 200's context information. The MVNO system 210 stores this information in the purchase and context information database 240. For example, the MVNO system 210 can identify the customer 200 and further sense whether the customer 200 is an adult, a child or a senior citizen. Likewise, the MVNO system 210 can also sense whether the customer 200 is establishing a contact with the MVNO system 210 from home or from the office or a car dealership. The MVNO system 210 can also predict an activity in which the customer 200 is interested, such as watching a movie, playing a game, cooking or collecting stamps. The MVNO system 210 also takes into account the time of the day of the customer 200's call and presents a solicitation proposal accordingly.

Over the period of time, the MVNO system 210 accumulates the context information for a plurality of products purchased by the customer 200. This formulates the purchase history of the customer 200, which is stored in a customer record in the purchase and context information database 240. The purchase and context information database 240 stores a plurality of customer's 200 accumulated context aware purchase histories.

In one embodiment, the MVNO system 210 uses the standard and propriety data mining tools for accomplishing redundant data storage. The MVNO system 210's hardware and software specifications are designed to support redundancy.

Based on the analysis of the purchase history of the customer 200, the MVNO system 210 derives a set of rules regulating the offers presented to the customer 200. These rules can either be event driven rules or time driven rules. The time driven rules represent the periodic necessities of the customer 200. The timer counts the appropriate time for presenting the promotional offer to the customer 200. For example, if on several previous occasions, the customer 200 purchased certain product at certain time of the year, then the customer record for customer 200 will include a timer associated with the product category of the product purchased.

The customer record also consists of a set of event driven rules, wherein the customer 200's need for a product is triggered upon happening of an event. In that case, the customer record includes a task associated with each event driven rule. The task periodically checks for the occurrence of the event that triggers the rule. For example, if the customer 200 purchased a current version of certain financial management software, the timer will start when the purchased version of the software was released, and will expire at the release of next version of the software.

The MVNO system 210 designs appropriate database indices for the purchase and context information database 240, which aids the MVNO system 210 to promptly locate the customers 200 that are likely to be interested in a vendor 220's promotional offer. Furthermore, the purchase and context information database 240 can also be indexed so that queries can be run by a product type, a product brand, and a price range. The purchase and context database 240 can also be indexed to promptly access the database while locating the prospective customers. The prospective customers 200 are the customers who are likely to purchase the product that is the subject of vendor's 220 promotional offer. A qualified vendor 220 is the vendor who supplies the product requested by the customer 200. Similarly, the vendor database 250 can also be indexed to locate the qualified vendors 220. Alternatively, both the purchase and context information database 240 and the vendor database 250 can be indexed to quickly locate the prospective customers 200 and qualified vendors 220 who would respond to the solicitation proposal generated by the MVNO system 210.

In conjunction with deriving the rules, the MVNO system 210 assimilates the context aware purchase history of the customer 200 to classify the customer 200 into one of the preset customer profile categories. For example, the MVNO system 210 considers whether the customer 200 plans his purchases or whether the customer 200 is a compulsive buyer. The MVNO system 210 also judges whether the customer 200 understands the market trends or whether the customer 200 has no regard for the current trends in the marketplace. The purchase history of the customer 200 is stored in the purchase and context information database 240.

For example the MVNO system 210 may classify a customer as a detail oriented customer, if prior to purchasing a phone, the customer 200 made several inquiries about the phone such as whether the unit has a built-in caller ID, a built in answering machine, or a call back feature etc. On the contrary, if the customer 200 made only one inquiry about the phone and purchased a phone, the MVNO system 210 may classify the customer 200 as an impulsive buyer.

Therefore, the past purchase history as well as the present purchase behavior 230 of the customer 200 determines the kind of solicitation the customer 200 is likely to receive. An impulsive buyer and a non-impulsive buyer represent two different customer 200 groups, each having a unique purchase behavior 230. It is only after reviewing the customer 200's purchase history, that the MVNO system 210 defines a solicitation proposal for the customer 200. The customer 200 who pays attention to detail would get a solicitation proposal that would cover the detail features of the product the customer 200 is seeking to buy.

For example, if this customer 200 is interested in buying a car, the MVNO system 210 informs the customer 200 about features such as ABS, air bags etc. This customer 200 is also advised what time of the year the prices of the car would significantly fall because the dealership would need to clear up the previous year's models. Not being an impulsive shopper, this customer 200 is more likely to plan and budget ahead. However, if the customer 200 is a spur-of-the-moment shopper, the customer 200 is given the best automobile deal that is available in the market at the time the customer 200 wants to buy it, simply because the customer 200 may change his mind the next day.

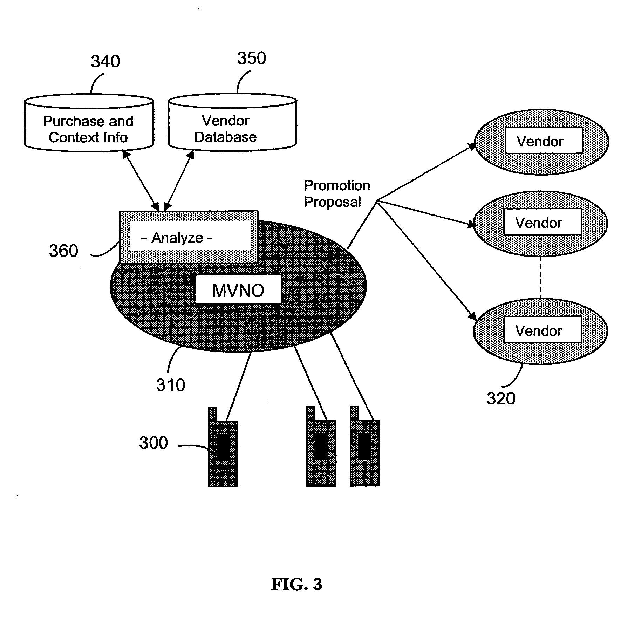

FIG. 3 elaborates the information processing cycle employed by an MVNO system 310. A vendor database 350 contains sales history of a vender 320, which is analogous to a customer's purchase history. The vendor 320's sales history includes the details about the products offered by the vendor 320, such as vendor 320's price caps, whether the vendor 320 supports flexible pricing, and whether the vendor 320 has a seasonal business, which prompts for a special end-of-the season sale, etc. The vendor database 350 may also include the information about the vendor 320 such as the vendor 320's negotiation practices.

The vendor 320 can present a promotional offer to the MVNO system 310 for the sale of a product or service. Upon receiving the vendor 320's promotional offer, the MVNO system 310 searches the purchase and context information database 340 to identify the prospective customers 300. Then the MVNO system 310 presents the vendor's 320 promotional offer to a prospective customer 300. If the customer 300 purchases the product or service, the MVNO system 310 records the sale transaction in the purchase and context information database 340.

The MVNO system 310 designs appropriate database indices for the vendor database 350, which aids the MVNO system 310 in locating the qualified vendors 320. The database indices are also helpful in locating the vendors 320 that are likely to be interested in the promotional proposal generated by the MVNO system 310.

The customer 300's purchase history is stored in the purchase and context information database 340. After the customer 300 presents a purchase proposal, the MVNO system 310 searches the vendor database 350 for the qualified vendors 320. Then the MVNO system 310 presents the customer 300's purchase proposal to the qualified vendors 320. If the vendor 320 accepts the purchase proposal, the MVNO system 310 completes the sale. The MVNO system 310 records the sales transaction in the purchase and context information database 340. If the vendor 320 declines the customer 300's purchase proposal, the MVNO system 310 negotiates with the vendor 320 and records the vendor 320's response in the vendor database 350.

The purchase and context database 340 contains the transaction details of each contact between the customer 300 and the MVNO system 310. The MVNO system 310 is unable to use the unprocessed data in the purchase and context database 340. The analyzer 360 retrieves and processes the information from the purchase and context information database 340. In other words, the analyzer 360 analyzes and converts the context aware purchase history of the customer 300 into the meaningful rules. Prior to constructing the rules, the analyzer 360 identifies the customer's 300 frequently ordered products and services, the frequency of the orders placed by the customer 300, and then the analyzer 360 determines a purchase pattern. Based on the customer 300's purchase pattern, the analyzer 360 also explores the possibility of sale by anticipating the customer's 300 future needs.

For example, the vendor 320, who is the vender of the financial management software, may send a notification to the MVNO system 310 that version 4.0 of the financial management software has been upgraded to version 5.0. The analyzer 360 then searches the purchase and context database 340 to locate the prospective customers 300, who purchased the version 4.0 of the financial management software. The MVNO system 310 then attempts to form a solicitation proposal to convince the prospective customers 300 to buy the newer version of the financial management software.

To locate the pool of potential customers, the analyzer 360 reviews the personal profile of each customer 300 who purchased the version 4.0 of the softwares and reviews the spending habits of the prospective customers 300, dollar amount spent on software purchases, whether the customer purchased any other upgrade, etc. All this information helps the MVNO system 310 to come up with a reasonable proposal.

The information about the vendor is then sent to analyzer 340. To generate a solicitation proposal, the MVNO system 310 reviews the information about the vendor 320 from the vendor database 350. Then the MVNO system 310 presents the solicitation proposal to the vendor 320 for sale of the new release of the software at 20% lower than the market price. Finally, if the vendor 320 accepts the solicitation proposal, then the MVNO system 310 presents the solicitation proposal to the prospective customers 300.

However, if the customer 300 is a corporation which uses the software extensively, and may encounter difficulties if they would not purchase the latest version of the finance management software, then the MVNO system 310 would not necessarily negotiate with the vendor for a cheaper price. Because the corporation needs the latest version of the software, it is likely that the corporation would pay the vendors' 320 listed price for the software.

The purchase and context information database 340 is updated in real time every single instance when the customer 300 requests information. The MVNO system 310 observes and accumulates and stores the context aware purchase history of the customer 300 in real time. Also the MVNO system 310 communicates the customer 300's purchase proposal substantially in the real time to the qualifying vendors. Similarly the MVNO system 310 communicates the vendor 300's promotion proposal substantially in the real time to the prospective customers 300.

Likewise, the MVNO system 310 communicates the solicitation proposal generated by the MVNO system itself, to the vendors 320 in substantially real time. Once the product is sold to the customer 300, the MVNO system 310 subtracts the commission from the amount paid by the customer 300, also in substantially real time. At any time during its operation, the MVNO system 310 can modify the terms of the solicitation proposal in real time. For example, after selling a product to the first hundred customer 300s, the vendor 320 may choose to increase the product price, the MVNO system 310 communicates the increased price to the customers 300 in real time.

The MVNO system has the ability to sense and record the customer 300's personal context information including customer 300's identity, the activity in which the customer 300 is engaged, the customer 300's location information, the information about the customer 300's schedule, and customer 300's usage habits etc. Furthermore, the MVNO system has the ability to sense and record the customer 300's external context information. The external context information includes the time and the day when the customer 300 established the contact with the MVNO system 310, the identities of the people who are present near the customer 300 at the time of the customer contact, and nearby activities concurrently happening at the time of the customer contact. Finally, the MVNO system 310 has the ability of sensing and recording the context information of the device used by the customer 300 to establish the contact with the MVNO system 310. The device context information includes the computing capabilities of the device used by the customer 300 while contacting the MVNO system 310, the display capabilities of a device used by the customer 300 while contacting the MVNO system 310, and the proximity of the device used by the customer 300 while contacting the MVNO system 310 to the any other surrounding devices.

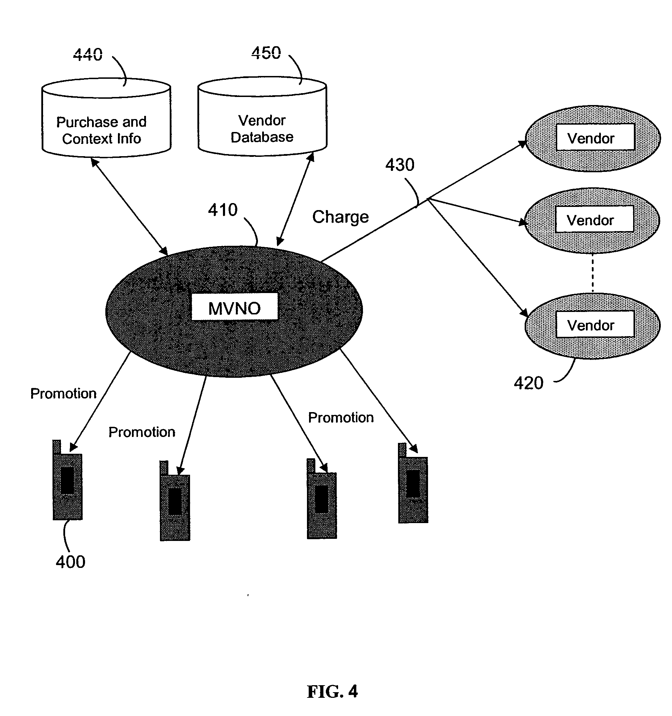

FIG. 4 describes a solicitation phase wherein after considering the customer's 400 context information, the MVNO system 410 presents a solicitation proposal to the customer 400. Employing the Global Positioning System (GPS), the MVNO system 410 has the location sensing ability, which assists in detecting the exact location of the potential customers 400. The context sensing capabilities make the MVNO system 410 a very versatile system. Since the vendors 420 do not always have access to the state of the art technology that can compile the customer's 400 context information, the MVNO system 410 offers the vendors 420 some of the unique services that can help in cultivating the vendor's 420 business.

The vendor 420 who wants to sell ten football game tickets may notify the MVNO system 410 at 4:00 pm, that if possible, the MVNO system 410 should sell the ten game tickets by 7:00 pm. The MVNO system 410 first searches the purchase and context information database 440 for locating the prospective customers 400. Then, the MVNO system 410 reviews each customer 400's purchase history and checks if the customer 400 has ever purchased football game tickets in the past. The MVNO system 410 also checks how many tickets did the customer 400 buy if any, implying that the customer 400 had friends, family or colleagues who also enjoyed the game. Then, the MVNO system 410 identifies an accountant and his nine friends located in their offices in downtown Chicago, as the potential customers. The MVNO system 410 further senses that accountant and his friends are still in their offices.

Then the MVNO system 410 searches the vendor database 450 to review the vendor 420's characteristics such as the vendor's 420 record of accepting or rejecting either the MVNO system 410's solicitation proposal or the customer 400's sale proposal, the vendor's 420 negotiation practices etc.

After considering the price the accountant has paid for a football game ticket in the past and the price the vendor 420 charged for a football game tickets in past, the MVNO system 410 generates a solicitation proposal to sell all ten tickets to the accountant and his friends. Because the tickets are sold at the last minute, the MVNO system 410 presents the solicitation proposal to the vendors 420 offering to sell the game tickets for $100 instead of $200. The solicitation proposal is sent to respective vendors 420.

The vendors 420 may accept or reject the solicitation proposal presented by the MVNO system 410. If the vendors 420 accept the solicitation proposal, the vendors 420 would send an acceptance to the MVNO system 410. Then the MVNO system 410 would automatically charge the vendors 420 for the commission 430. However for the safety of the customers 400, the vendors 420, and the safety of the MVNO system 410 itself, an external financial authorization network can possibly verify the monetary transactions in the MVNO system 410. Upon receiving the vendor 420's approval for the solicitation proposal, the MVNO system 410 would send the solicitation proposal to the customer 400, in this case the accountants located in the Chicago downtown area, only a few blocks away from the location of the game that will start in less than three hours.

The deal will please the vendors 420, since they can at least make $1000 instead of none. The customers 400, in this case the accountant and his friends would be happy to pay half price for a game they would like to watch a live game. The MVNO system 410 earns a commission for the sale of the tickets, hence all the involved parties would benefit from the deal.

Having the customer 400's context information available makes the MVNO system 410 a very powerful marketing device. The MVNO system 410 also has an ability to sense the computing capabilities of the machine from where the customer 400 is contacting the MVNO system 410. Hence, in the above-mentioned example, the MVNO system 410 noted that accountant and his friends were in their offices before identifying them as the potential customers.

The MVNO system 410 also senses the details about the customer 400's computer's display capabilities, proximity to the other resources such as, in the above mentioned example, knowledge of the fact that the accountant was located in his office which was just two blocks away from the football stadium, was very helpful in selling the game tickets.

In our example, the accountant has been connecting to the MVNO system 410 from his office in downtown Chicago, but if the accountant connects the MVNO system 410 from Denver while he is on the business trip, the system can sense that, and offer him a lightweight travel laptop computer. Apart from the customer contact established from Denver, the MVNO system 410 can also infer that the customer 400 is likely to travel frequently from the fact that the accountant purchased several airline tickets using the MVNO system 410.

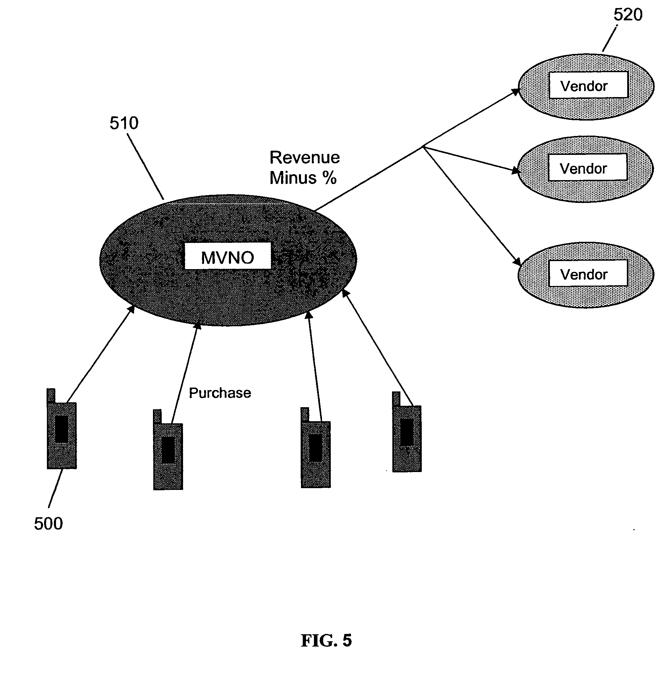

The financial structure of the MVNO system 510 is described in FIG 5. The fiscal cycle of the MVNO system 510 operates in the following manner. The customer 500 knows that the MVNO system 510 presents the best available deal, hence the customer 500 trusts the MVNO system 510. After the MVNO system 510 presents a solicitation proposal to the customer 500, it is up to the customer 500 to accept or reject the solicitation proposal. If the customer 500 accepts the solicitation proposal, and purchases the product from the MVNO system at 510, the MVNO system 510 retains its own commission by returning the revenue amount minus the percentage of the commission to the vendors 520. Because the financial structure is clear to all parties involved in a transaction, there is less room for disputes. The customers 500 and the vendors 520 use the MVNO system 510 because they believe in the usefulness of the MVNO system 510. Because of the clear and precise financial rules, the MVNO system 510, runs smoothly, and leaves less room for disputes.

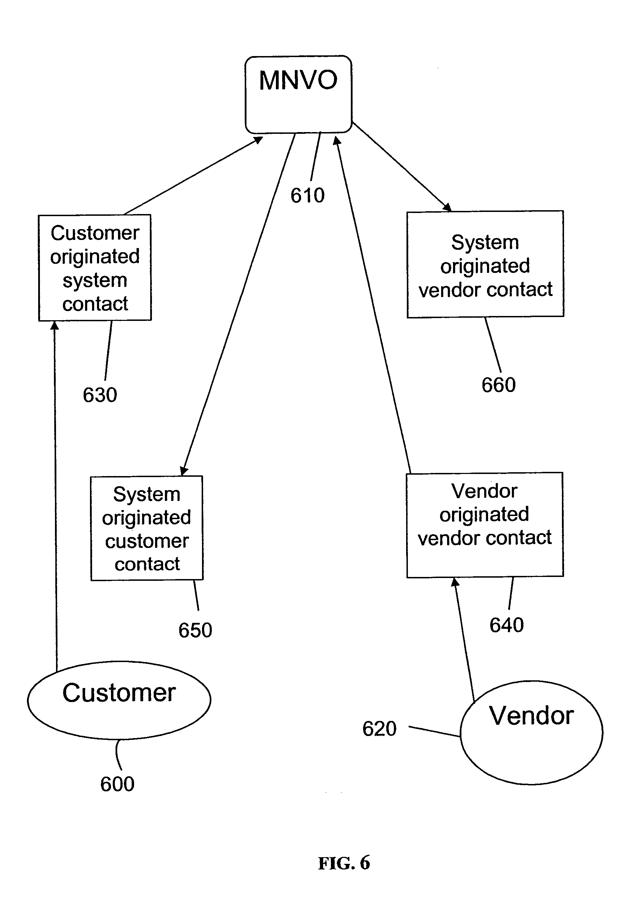

FIG. 6 enumerates the four types of possible contacts between an MVNO system 610, a vendor 620 and a customer 600. Two types of contacts exist between the MVNO system 610 and the customer 600. The first type of contact is a customer originated system contact 630, wherein the MVNO system 610 responds to the customer 600's search request. By sensing, storing and analyzing the customer 600's requests generated under the customer originated system contact 630, and by using this historical data, the MVNO system 610 formulates the customer 600's profile.

The MVNO system 610 derives rules from the customer 600's profile. For example, to continue with the pizza and movie example, if the MVNO system 610 senses that the customer 600 orders a pizza and a movie every night, the MVNO system 610 may form a rule that the customer 600 must be offered a movie proposal every Friday. Based on the statistical analysis of these rules, the MVNO system 610 can predict the customer's 600 needs at any given time.

Alternatively, the second type of contact between the MVNO system 610 and the customer 600 is a system originated customer contact 650. Under this type of contact, the MVNO system 610, initiates a solicitation proposal for the customer 600, based on the customer's 600 prior purchase history. The MVNO system 610 may just forward the vendor's 620 promotional offer to the customer 600, which is initiated by the vendor 620 under vendor initiated system contact, the characteristics of this contact are discussed below. On the other hand, the MVNO system 610 on its own, may generate the solicitation proposal based on customer's 600 anticipated needs. The MVNO system 610 considers multiple factors, prior to initiating the system originated customer contact, such as the customer's 600 context, the customer's 600 external context, the customer's device-specific characteristics, etc.

Likewise, two types of contacts exist between the MVNO system 610 and the vendor 620. The first type of contact between the MVNO system 610 and the vendor 620 is a vendor originated system contact 640. The vendor 620 initiates this contact for several reasons. One of the reasons might be that the vendor 620 may have a stock of surplus products such as car models of the previous year, which must be sold by the end of the year to accommodate the car models of the subsequent year. In this case, hoping that the MVNO system 610 would generate additional sales the vendor 640 may approach the MVNO system 610 and present a promotional offer.

The second type of the contact between the MVNO system 610 and the vendor 620 is a system originated vendor contact 660, where the MVNO system 610 presents a solicitation proposal to the vendors 620 based on customer's 600 anticipated needs. The MVNO system 610 uses the purchase and context information database to anticipate the customer's 600 needs. After anticipating the customer's 600 needs, the MVNO system 610 maps each of the customer's 600 need to a product category.

In the above-mentioned example, the MVNO system 600 would have the customer 600 looking for a 2002 model of a brand X car. The MVNO system 610 would then search the vendor database and find the list of vendors 620 who carry the 2002 model of a brand X car. At this stage, the MVNO system 610 functions like any other Internet search engine such as Yahoo, Alvista or Goggle etc. But if the vendor 620 supplying the needed product is not found, unlike the other Internet search engines, the MVNO system 610 generates a solicitation proposal for the vendors 620.

One of the unique features of the MVNO system 610 is generating the solicitation proposals for the vendors 620. For a business, the marketing efforts often include performing market research identifying the prospective customers, defining the customer 600's needs, gathering their prior purchase history etc. The marketing efforts also focus on making the product available anytime the customer 600 needs it. The vendors 620 prefer to be able to meet the customer's 600 last minute needs. The MVNO system 610 performs all these marketing tasks for the vendors 620.

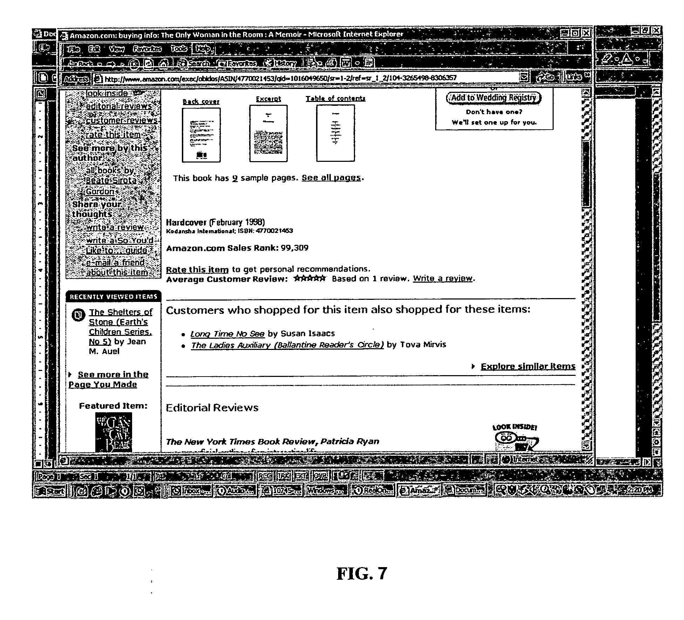

FIG. 7 is a screen shot of the prior art Amazon.com website. The Amazon.com website keeps track of website's consumer's preferences. Using the stored information regarding the consumer's prior purchases, the website presents a solicitation proposal for the consumer. For example the website tracks the consumer's favorite author or topic. When a consumer purchases a book or inquires about a book, the website finds a group of consumers who also purchased the queried book. Then the website also finds other books purchased by the same group of consumers. Then the website presents a proposal to the querying consumer such as: "Customers who shopped for this item also shopped for these items".

This inquiry involves the bookkeeping of the names of the consumers and the names of the books purchased by the consumers, and anticipating who is more likely to buy the specific book. This feature is also widely used by other websites in a similar fashion. But the important point of distinction between this feature of the prior art and the preferred embodiment of the present application is that the preferred embodiment appoints an independent agency, the MVNO system which has no association with any one vendor in particular, yet, the MVNO system represents interests of all the participating vendors.

The MVNO system also shoulders the responsibility of all the critical marketing tasks such as gathering the consumer information, processing the consumer information, forming rules for solicitation and generating a solicitation. Thus, the prior art search engines are ineffective for locating the products outside of the vendor they represent, in fact they would never quote a competitor who carries a product at a cheaper price because it conflicts with their own business interest.

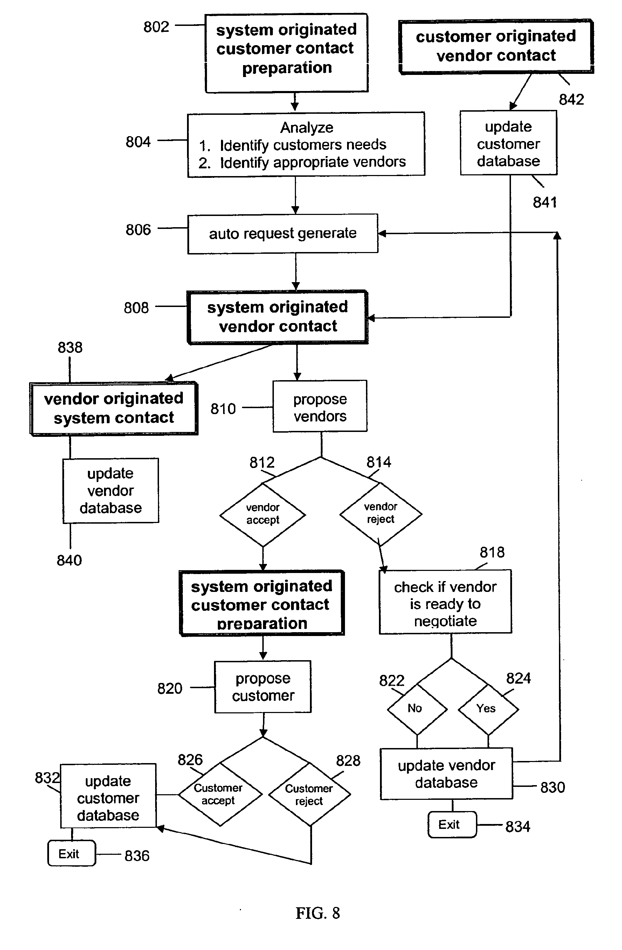

FIG. 8 describes a control flow diagram of an MVNO system. At numeral 802, the MVNO system prepares to initiate a system originated customer contact. Using the logs of the customer's purchase histories, the MVNO system establishes a pattern of the purchase behavior. To establish a pattern, the MVNO system starts a timer from the time when the customer first requests a product. Using both the previous purchase history log and timer recordings, the MVNO system can establish a purchase pattern for a customer. Based on the purchase pattern, the MVNO system anticipates the customer's needs at any given time. For example, if a customer orders a pizza and a movie every Friday night, the MVNO system would not know the first few times that the customer purchases a pizza and a movie every Friday night, but, after repeated requests of the same type, over a period of time, the MVNO system will eventually detect the customer's purchase pattern.

Once the purchase pattern is established, the MVNO system does not wait for the customer to request a pizza and a movie. On the contrary, knowing that the customer is going to request a pizza and a movie on a Friday night, the MVNO system, on its own searches the vendor database for a pizza and a movie deal offered by the participating vendors. Hence, in the stage analyze 804, the MVNO system anticipates what the customer is likely to purchase in near the future and then it identifies the appropriate vendors who carry the product needed by the customers.

After the analyze stage, the MVNO system moves to auto request generate stage 806, wherein the MVNO system generates a solicitation proposal for the vendor for a pizza and a movie. Then the MVNO system initiates the system originated vendor contact 808 for presenting the pizza and movie proposal generated in the previous stage 806 to the pizza and movie vendors. Under the MVNO system originated vendor contact, the MVNO system actually presents the solicitation proposal to a group of qualified vendors at stage 810. The vendors accept or reject the solicitation proposal presented to them by the MVNO system.

If the vendor accepts the solicitation proposal at stage 812, then the MVNO system initiates the system originated customer contact 816. Then at stage 820, the MVNO system presents the solicitation proposal to the customers, which has been already been accepted by the vendor. It is now up to the customers to accept or reject the solicitation proposal. If the customers accept the solicitation proposal 826, then the MVNO system updates the purchase and context information database with customer's recent transaction at numeral 832, and then exits at numeral 836.

However, if the vendors reject the MVNO system solicitation proposal at numeral 814, the MVNO system further verifies if the vendors are ready to negotiate the solicitation proposal at 818. If the vendors are willing to negotiate the solicitation proposal at numeral 824, then the MVNO system generates another request which might be more acceptable to the vendors and the MVNO system moves back to auto request generation stage 806. The events from stage 806 up until 836 are discussed above, the same sequence of events is repeated the several times while the MVNO system negotiates the solicitation proposal with the vendor. On the other hand, if the vendors are not willing to negotiate 822, the MVNO system updates the vendor database 830 and then exits at 834.

It is also possible that a vendor might initiate a contact with the MVNO system, which is called the vendor originated system contact 838. To continue with the previous example, in their attempt to boost their sales, the pizza and the movie vendors may present a promotional offer to the MVNO system to pass it on to the prospective customers. After the MVNO system receives a promotional offer from the vendors 838, the MVNO system first updates the vendor database 840 and moves to stage 816. Then the MVNO system initiates the MVNO system originated customer contact by presenting the vendor's promotional offer to the customers. All the events from 816 to 836 are the same as discussed above.

Finally, it is possible that the customers may present a purchase proposal by initiating a customer originated system contact 842. The purchase proposal would be presented to the MVNO system at 842. The MVNO system first updates the purchase and context information database at 841 and then the MVNO system moves to stage 808 wherein the MVNO system originates the MVNO system originated vendor contact and all the events that happen from 808 through 836 or possibly 834 are as discussed above.

Therefore, the preferred embodiments provide a mobile virtual network operators (MVNO's) system that will provide services offered by different vendors, under a single roof, and also provide a single point of contact for a customer. The preferred embodiment also provides a system where a customer contacts only one provider and expects to deal with only that provider, regardless of how many operators are involved in the provision of various services. The preferred embodiment also provides a system and method for enabling the MVNO system to observe and record a purchase behavior of a customer in real time and to analyzer the purchase history of the customer to anticipate or predict future needs of the customer. The preferred embodiment also provides the MVNO system business model that creates the opportunity to provide context aware services, which considers various facets of the customer's context and use the context information in selecting a search service operation. The preferred embodiment also provides a cost-effective method of Internet advertising where the vendor is charged in direct proportion to the sale generated by the MVNO system.

Without the MVNO system, customers are required to browse extensively until the vendor responsive to their product request is found. The search process can be slow and unwieldy from the consumer standpoint. Every time a consumer performs a search, the consumer is required to enter the secured information, which might concern a consumer. A customer is also frequently required to deal with different vendors for various shopping needs. Additionally mobile applications have increased the versatile nature of the Internet connection. The mobile applications enable network access from various locations, which has a significant impact on the marketing effort, since time, place and context of a solicitation has a bearing on a customer's likelihood of purchasing a product. The mobile wireless customers have traditionally been connected to only one network operator. Only certain types of services were provided by a network operator working for that specific network service provider.

The preferred embodiment creates a new system of advertising where the MVNO system targets the interested consumers by understanding the customer's external context, for example, time of day, nearby people, other nearby activity. The preferred embodiment creates a new system of advertising where the MVNO system targets the most interested consumers by understanding the customer's personal context such as customer's identity, activity, location, schedule, usage habits. The preferred embodiment creates a new system of advertising where the MVNO system targets the most interested consumers by understanding the characteristics of the customer's devices, for instance, computing capabilities, display capabilities, and proximity to other devices with resources available for sharing.

The preferred embodiment creates an open market for Internet advertising that is fair to consumers and vendors, wherein the vendor's expectations are clearly stated and a customer is guaranteed to get the best available deal under the MVNO system. The preferred embodiment allows a vendor to dynamically change the sale attributes such as price to accomplish a volume sale or a last minute sale.

Thus, the present system appoints an independent agency, the Mobile Virtual Network Operator (MVNO) system which represents the interests of the participating vendors of the MVNO system, and still, the MVNO system is not associated with any one particular vendor. The MVNO system also represents interests of the consumers while presenting the best available deal for the product the customer needs.

One preferred embodiment provides the MVNO system and method that allows mobile wireless customers to access the services provided by several providers via a single network operator. The MVNO system acts as a liaison between a customer and a vendor. The MVNO system is a service for aggregating a customer's contextual data and purchase history and presenting a solicitation proposal to the subscribing customer on behalf of the subscribing vendor. The MVNO system also presents a promotion proposal to the subscribing vendors on behalf of a group of customers.

The data is aggregated to discover potential markets for the subscribing vendors. The MVNO system comprehends the profile of an existing customer. Having a customer's profile information available facilitates the anticipation of the customer's future needs. While dealing with a new customer, the MVNO system is prepared to learn, store and analyze the new customer's profile information. Hence the MVNO system offers a level of targetability, interactivity, and measurability not generally available to other networked applications.

The MVNO system provides a common channel of communication that connects customers and vendors. The MVNO system directly communicates the data that is derived from the customer requests to the vendor. Using this information, the vendor would be able to provide the precise product that matches with the customer's needs. The preferred embodiment of the present invention also seeks to eliminate the advertising and market research cost incurred by individual vendors. Not being a random marketing call, the MVNO system is generally trusted and welcomed by a customer. The MVNO system is designed to present the best available deal to a customer. It must also be noted that since the MVNO system keeps track of the needs of the customer, the customer does not even have to ask for the deal.

Furthermore, all the relevant customer data is kept confidential and only a relevant synopsis of that large data is passed on to the vendors. This reduces the possibility of a customer receiving a direct solicitation from the vendors. Using the MVNO system, the customers enjoy new promotions tailored to their past and present purchase behavior. Moreover, the MVNO system does not expose information about an individual customer to a vendor therefore, the customer receives fewer cold calls at inconvenient times and fewer unsolicited Internet shopping and postal messages.

The preferred embodiment of the MVNO system has a virtual operator that provides a variety of mobile services by establishing a partnership with an existing established network operator. This implies that a wide variety of typical services for a typical customer are all made available at one location via only one virtual network operator. The MVNO system is convenient for the customers to find all the products and services they need at a single location. Additionally, having the pertinent customer information compiled at single location is very useful for the consumer research gathering and analysis effort. On account of its thorough analysis, the MVNO system can identify the hidden costs or any other non-apparent product details.

For example, if the MVNO system learns over time that a given customer routinely buys a pizza and rents a movie every Friday night, then the next Friday night the system finds the discount offers for pizza and movie rental, published by the subscribing vendors and delivers them to that customer. Over a period of time, the MVNO system may learn of 1000 additional customers who too would like to buy a pizza and rent a movie. This information enables the MVNO system to propose a promotional proposal to vendors, equipped with historically verified information regarding real potential buyers instead of mere projections of prospective buyers. The 1000 customers have demonstrated interest in buying a pizza and a movie, so the proposition of selling 1000 pizzas and renting out 1000 movies should be very compelling to the pizza and movie vendors who receive the MVNO system's promotional proposal. The MVNO system has the market information and direct access to a group of 1000 customers.

Based on the customer's location, the MVNO system dynamically changes the contents of the solicitation. If the target customer is in the office when he receives the MVNO system message, the MVNO system offers products or services that are beneficial to the customer's business. Similarly if the customer is connected to the MVNO system from home, then the offer focuses on the customer's hobbies and personal favorites. To successfully accomplish a sale, the MVNO system carefully times the presentation of the solicitation, and location where the solicitation is presented. For example, the MVNO system avoids presenting the solicitation proposal to an accountant during the tax season.

The MVNO system is a helpful tool for the vendors. The MVNO system enables the vendors to target interested customers via special offers. The special offers can be created, presented, and abandoned at any time before a customer accepts the offer. The offers exist as long as the offer is relevant and useful, hence the vendor does not have to issue paper coupons, to process the received coupons months or years after the end of the promotion period. Vendors prefer the MVNO system because the MVNO system independently performs marketing functions without vendor intervention. While introducing a solicitation proposal to a customer the MVNO system considers the customer's context information, such as the customer's personal context, the customer's external context, and the device-specific characteristics of the device used by the customer to connect to the MVNO system. These factors are elaborated in detail below.

The MVNO system is helpful for customers since customers can count on the MVNO system to perform market research for the customers, which saves the customer's time and energy. Obtaining relevant information over the Internet can be challenging. The customer might have to browse for a long time before the customer can locate the needed product. Additionally, the product may involve hidden costs and marketing catches. The MVNO system provides a precise product that would meet the customer's needs. The customer does not have to make a request for a product or specify the specific information about the product, such as brand, price preferences, etc. The MVNO system, without being prompted by the customer, provides a precise product that would meet the customer's needs.

Customers prefer the MVNO system because it meets the needs of a customer without introducing any marketing catches or hidden costs. Furthermore, the MVNO system can be customized to meet the individual needs of a customer. Most systems operated or planned today include some measure of customization at the level of display format, selection of search universe, and/or customer profile.

Context aware computing will enable services beyond those presently offered by the Internet. One embodiment of the present invention provides Context aware Search Services where the search inquiry, the search domain, and the search results are customized according to the customer's context. For example, a search on an author's name might return different results depending on whether the customer is accessing via a computer at home or at work, accessing via a fixed computer, a mobile telephone, a wireline, or a wireless network, from a bookstore or a library. This embodiment seeks to protect a customer's privacy and also increases the usefulness of the application.

In yet another embodiment, the MVNO system provides for Context aware Health Services wherein the personalized health information and services are provided based on the customer's contextual information. For example, if some physiological condition such as blood sugar or heart rate exceeds some pre-specified limit, a customer might receive an alert along with relevant instructions and directions to a medical facility if needed.

The MVNO system has several advantages. The vendors are interested in either selling a product at the highest possible price to secure a good profit margin or in selling the product at lower price but in large volume since the volume sale can make up for the price reduction. The customers are interested in purchasing the product at the lowest possible price. Hence, there is an inherent conflict between the interest of a vendor and that of a customer. The MVNO system seeks to act as a liaison between these two conflicting interests. Because the MVNO system gets a percentage commission on each sale, just like the vendor, the system too is interested in accomplishing a sale. However, the system is unable to sell a product to a customer unless it meets the expectations of the customer. Hence, the MVNO system takes into consideration the customer's interests along with the vendor interests.

## Claims

1. A method of generating a marketing offer, using a computer network comprising the steps of:
maintaining a mobile virtual network operators system (the system), which is a single point of contact for wireless customers accessing a variety of services offered by a plurality of vendors;
receiving, recording and analyzing a product search request from a customer;
creating and maintaining a customer database having stored therein accumulated context aware purchase histories for a plurality of customers from the receiving, recording and analyzing step;
creating and maintaining a vendor database having stored therein a plurality of vendor's sales histories;
generating a solicitation proposal for the customer based on the customer's purchase history in the customer database; and
processing the solicitation proposal including searching and updating the vendor database, and searching and updating the customer database.

2. The method of Claim 1 further comprising the steps of:
receiving a promotional offer from a vendor; and
processing the promotional offer generated by the vendor including updating the vendor database and searching the customer database.

3. The method of Claim 1 further comprising the steps of:
receiving a purchase proposal from the customer for a product; and
processing the purchase proposal generated by the customer including updating the customer database and searching the vendor database.

4. The method according to Claim 1, where the system and the vendors are two distinct and independent entities.

5. The method of Claim 1, wherein the vendor's expectations regarding a sale are clearly stated and the customer is guaranteed the best available deal in the system.

6. The method of Claim 1, wherein the system allows the vendor to dynamically change any attributes of the promotional offer before the promotional offer is accepted by the customer.

7. The method of Claim 1, wherein after reserving a predetermined sale amount as a sales commission, the system returns a revenue amount to the respective vendor.

8. The method of Claim 2, wherein the customer is a prospective customer, if the customer has previously purchased the product, which is the subject of the promotional offer generated by the vendor.

9. The method of Claim 2, wherein the customer is a prospective customer, if the customer has previously purchased the product, which is the subject of the solicitation proposal.

10. The method of Claim 3, wherein the vendor is a qualified vendor if the vendor supplies the product, which is the subject of the purchase proposal or the solicitation proposal.

11. The method of Claim 10, wherein the step of processing the purchase proposal generated by the customer further comprises the steps of:
searching the vendor database to locate the qualified vendors; presenting the customer's purchase proposal to the qualified vendors; communicating the vendor's response to the customer generating the purchase proposal; and
updating the vendor's database to record the vendor's response.

12. The method of Claim 8, wherein the step of processing the promotional offer from the vendor further comprises the steps of:
searching the customer database to locate the prospective customers; presenting the vendor's promotional offer to the prospective customers; communicating the customer's response to the vendor generating the promotional offer; and
updating the customer database to include the customer's response.

13. The method of Claim 1, wherein the step of processing the solicitation proposal comprises the steps of:
anticipating the customer's future needs based on the customer's context aware purchase history;
generating the solicitation proposal based on a plurality of rules derived from the customer's context aware purchase history;
presenting the solicitation proposal to the vendors;
negotiating with the vendors upon receiving the vendor's refusal for the solicitation proposal;
receiving the vendor's acceptance for the solicitation proposal; searching the customer database to locate the customers interested in the product that is subject matter of the solicitation proposal;
presenting the solicitation proposal to the customers;
receiving the customer's response to the solicitation proposal; and
recording the sale transaction in the customer database and the vendor database.

14. The method of Claim 1, wherein the customer database comprises one record for each of a plurality of customers, said customer record comprising:
a unique customer identifier;
the customer's purchase history for at least one purchase; and
at least one product category from which the customer purchased a product.

15. The method of Claim 1, wherein the vendor database comprises at least one vendor record for each of a plurality of vendors, said vendor record comprising:
a unique vendor identifier;
details of at least one product sold by the vendor; and
the vendor's sales history for at least one product.

16. The method of Claim 1, wherein the step of receiving, recording and analyzing a product search request from the customer further comprises the steps of:
observing a plurality of context specific information of the customer each time the customer contacts the system;
recording the observed context information in the customer database; accumulating a plurality of product search requests of the customer to form a context aware purchase history of the customer;
processing the context aware purchase history of the customer; and
deriving the rules by analyzing the context aware purchase history of the customer.

17. The method of Claim 16, wherein the system observes and accumulates the context aware purchase history of a respective customer in real time.

18. The method of Claim 16, wherein the step of observing the context specific information of the customer, further comprises the steps of:
sensing and recording the customer's personal context information;
sensing and recording the customer's external context information; and
sensing and recording the customer's device's context information.

19. The method of Claim 18, wherein the step of sensing and recording the customer's personal context information, further comprises the steps of:
sensing and recording the customer's identity;
sensing and recording an activity customer is engaged in;
sensing and recording the customer's location information;
sensing and recording the customer's schedule information; and
sensing and recording the customer's usage habits.

20. The method of Claim 18, wherein the step of sensing and recording the customer's external context information, further comprises the steps of:
sensing and recording the time of the day when the customer contacts the system;
sensing and recording the identities of the people present near the customer when the customer contacts the system; and
sensing and recording any other nearby activity concurrently happening when the customer contacts the system.

21. The method of Claim 18, wherein the step of sensing and recording the characteristics of a device used by the customer to contact the system, further comprises the steps of:
sensing and recording the computing capabilities of the device used by the customer to contact the system;
sensing and recording the display capabilities of the device used by the customer, to contact the system; and
sensing and recording the proximity of the device used by the customer to the other devices to contact the system.

22. The method of Claim 1, wherein, the system's Internet marketing efforts only target the customers who have proved the interest in the product which is the subject matter of the marketing.

23. The method to Claim 22, which reduces the marketing research cost of the vendor.

24. The method of Claim 22, wherein the participating vendors pay the system a contracting fee as well as a commission in proportion to the sale accomplished by the system.

25. The method according to Claim 22, which provides a cost-effective method of Internet advertising, where the vendor is directly and automatically charged in proportion to the sale generated by the system.

26. A method of:
maintaining a mobile virtual network operators system (the system), which is a single point of contact for wireless customers accessing a variety of services offered by a plurality of vendors;
generating a promotional offer using a computer network;
generating a solicitation proposal using a computer network;
generating a purchase proposal using a computer network;
maintaining a customer database including a plurality of purchase histories, wherein each purchase history is associated with a customer; maintaining a vendor database including a plurality of sale histories, wherein each sale history is associated with a vendor;
identifying the customer's needs based on the customer's purchase history;
searching the vendor's database to locate the vendor supplying the product needed by the customer;
comparing the results of the vendor database search and identifying the vendor who carries the product that meets the customer's needs; and
presenting the customer the best available deal in the system from the comparing step.

27. The method of Claim 26, further comprises the step of subtracting a commission amount from the amount paid by the customer, substantially in real time when a sale is accomplished by the system.

28. The method of Claim 26, further comprising the steps of:
indexing the customer database to locate a plurality of potential customers who are likely to be interested in the vendor's proposal; and
indexing the vendor database to locate a plurality of potential vendors that are likely to be interested in the customer's proposal.

29. The method of Claim 26, wherein, the customer database is indexed to be queried by a product type, a product brand, and a price range.

30. The method of Claim 26, wherein the vendor database is indexed to query by a product type, a product brand, and a price range.

31. The method of Claim 26, further comprising the step of communicating the customer generated purchase proposal to the vendor substantially in real time.

32. The method of Claim 26, further comprising the step of communicating the vendor's promotional offer substantially in real time to the customer.

33. The method of Claim 26, further comprising the step of communicating the solicitation proposal substantially in real time to the vendors and the customers.

34. The method of Claim 26, further comprising verifying the monetary transactions of the system in real time.

35. The method of Claim 26, wherein the system is able to modify the terms of the sale in a real time.

36. A system for enabling a plurality of mobile wireless customers to access variety of services offered by a plurality of vendors via a single network operator, the system comprising:
a customer database including purchase histories, whereas each purchase history is associated with a respective customer from the plurality of customers;
a vendor database including a plurality of sale histories, wherein each sale history is associated with a respective vendor from the plurality of vendors;
a set of rules driven from the plurality of the customer's accumulated purchase histories; and
a wireless network to communicate information based on said set of rules to the system customers.
